# EUROPEAN PATENT SPECIFICATION

(11) **EP 1 890 851 B1**
(45) Date of publication and mention of the grant of the patent: **09.09.2009**
(21) Application number: 06726612.2
(22) Date of filing: 31.03.2006
(51) Int. Cl.: B26B 29/06, G01B 3/10, B23Q 17/22, B23Q 9/00

(54) **SAW GUIDE**
SÄGENFÜHRUNG
GUIDE DE SCIE

(30) Priority: 01.04.2005 GB 0506674
(43) Date of publication of application: 27.02.2008
(73) Proprietor: W S NORMAN ENGINEERING (IOM) LIMITED, Isle of Man IM4 1AF (GB)
(72) Inventor: OSBORNE, Howard, Isle of Man IM1 4AP (GB)
(74) Representative: Harrison Goddard Foote
(86) International application number: PCT/GB2006/001208
(87) International publication number: WO 2006/103466

(56) References cited:
- DE-B- 1 239 861
- US-A- 4 325 278
- US-A- 5 390 425
- US-A- 5 787 599
- US-A- 5 894 675
- US-A1- 2003 230 180
- US-B1- 6 256 899

## Description

This invention relates to guides for use with hand saws for the cutting of materials including timber, plastics materials and metals.

It is known to use a guide to assist the making of a cut through a material in order to cut in a straight line across the width and through the thickness of the material. Non-expert workers often find such cutting operations particularly challenging since they require a high level of coordination of both the angle and position of the blade with respect to the material to be cut, whilst executing a reciprocating action of the blade between first and second positions of the blade.

A simple mitre box may be used as a guide, particularly for cutting wood, the box being adapted to receive the piece to be cut and having guides for the saw in the form of grooves.

US 2003/0230180 (HINES) discloses a guide for use with a cutting member having two angularly related members arranged so that when one member engages the face of a work piece, the other member (a guide member) functions to glidably engage a cutting member such as the blade of a handsaw, the guide member having a magnet which functions continuously to urge the saw into engagement with a plurality of rollers that are also carried by the guide member.

US 4,325,278 (BEERENS) discloses a hand saw guide comprising a member having two right angled related surfaces such that where one surface is in face to face contact with a component to be sawn, the other surface is perpendicular to the component, said other surface having incorporated therein a magnet that holds the blade of a saw against said other surface. The document further discloses a retractable tape measure that may be incorporated in the saw guide, projecting through an aperture in the surface in contact with the blade of the saw.

US 5,787,599 discloses a tape measuring square and adjustable tool guide in which a coilable tape measure is disposed on a base to serve as a template for marking a workpiece or fashioning the work-piece with a tool.

US 5,390,425 discloses a saw guide measuring square for measuring a portion of the work-piece and guiding a tool during an operation on the work-piece. The apparatus includes an aligning body portion for positioning the apparatus in the desired orientation against the work-piece and two tapes on the aligning body portion for measuring the dimension of a portion of the work-piece.

US 6,256,899 discloses a guide for a hand-held power cutting tool of the type having a blade extending through a base-plate. The guide includes a stem element having distance gradations thereon and a cutting tool guide piece attached to an end of the stem element.

US 5,894,675 discloses a combination tool for use in measuring, levelling, squaring and plumbing operations. The device includes a housing adapted to encase a tape measure including an extendable and retractable tape and adapted to encase a laser source capable of projecting a visible lightbeam.

DE1,239,861 discloses a tape measure coupled to a right-angled member arranged to be positioned against a vertical surface for measuring the height of a person.

According to the present invention there is provided saw guide for guiding the travel of a saw blade, the guide being adapted to be positioned on a workpiece to be cut, such that with a basal surface of the guide engaging a surface of the workpiece to be cut, a guide surface of the guide extends across the surface to be cut so that a cutting member in face to face contact with the guide surface may be guided during cutting of the workpiece without fouling the body portion, **characterised in that** the guide further comprises: a body portion having a forward end provided with the guide surface, the basal surface, and a rearward end provided with distance measuring means, the measuring means being adapted to measure a distance of the guide surface from an end of the workpiece located rearwardly of the body portion such that the distance may be monitored by reference to said measuring means whilst the cutting member is cutting the workpiece and abutting the guide surface, the distance being displayed in a display window provided on an upper surface of the body portion, and wherein the guide surface comprises a magnetic material to urge the cutting member into contact with the saw guide.

The present invention has the advantage over the prior art that the measuring means may be used even when a cut is being made using the saw guide.

The guide surface comprises a magnetic material to urge the cutting member into contact with the guide surface. Optionally, the guide surface may further comprise a wear-resistant plate mounted in juxtaposition with the magnetic material, or a wear-resistant coating of the guide surface.

The measuring means may be a sonic or laser beam measuring device.

Alternatively, the measuring means may be a tape, reversibly extendable from a rearward position of the body portion, in a rearward direction away from the guide surface.

Where a tape is used, preferably the saw guide further comprises means for reading the distance from a free end of the measuring tape to the guide surface. The position of the saw guide may therefore be continually monitored by reference to the measuring tape when a cut is being made. Thus, any requirement to scribe a line with a pencil or other marking implement in order to define where the cut is to be made is eliminated. Furthermore, the tool can be used to conveniently and rapidly mark a plurality of positions over a surface with respect to the free end of the tape measure. The positions might for example be the positions of holes to be drilled, or the positions where components such as vertical ribbing are to be attached to stud walling etc.

Preferably, the saw guide comprises means for reading the distance from a free end of the tape to the guide surface.

The display may comprise a digital display. Alternatively or in addition, the tape may be graduated to display distance along the length of the tape from the free end. The tape may be graduated such that the distance from the free end to the guide surface may be read by reference to the position of the tape at a convenient reference position. The display may comprise a digital display.

The free end of the measuring tape may have means for securing the free end to an edge of a workpiece. The means for securing the free end may be an angular tip, a loop, or a combination of both.

Preferably, the measuring tape comprises means for retraction when it is required to retract a length of withdrawn tape. The means for retraction may be spring-loading of the measuring tape, or a manual winding mechanism.

Preferably, the saw guide further comprises means for locking the position of the measuring tape so as to prevent further withdrawal or further retraction of measuring tape.

The ability to secure the free end of the tape measure to a position of the workpiece, and to lock the position of the measuring tape to prevent further withdrawal, enables the person making the cut to apply a pressure to the saw guide so as to place a tension on the tape measure, further enhancing the stability of the position of the saw guide on the surface to be cut.

Preferably the saw guide further comprises a guide fence. This has the advantage that the orientation of the saw guide may be more accurately fixed with respect to the workpiece.

Preferably the guide fence is releasably mountable on either of a pair of side faces of the body portion, said pair of side faces being mutually parallel, and orthogonal to the basal surface of the body portion.

The guide surface may be adapted to be pivotable about an axis normal to the basal surface so as to permit cuts at different angles normal to the plane of the surface of the workpiece to be made. Alternately, or in addition, the guide surface may be adapted to be pivotable about an axis in the plane of the basal surface so as to permit cuts at different angles to the plane of the surface of the workpiece. Thus, the tool may be effectively and efficiently used in the cutting of mitre and other joints. The pivoting guide surface is particularly effective in combination with the guide fence. A protractor may be provided for each axis of pivot in order to measure an angle of the guide surface relative to a reference surface.

For a better understanding of the present invention and to show how it may be carried into effect, reference shall now be made by way of example to the accompanying drawings, in which:

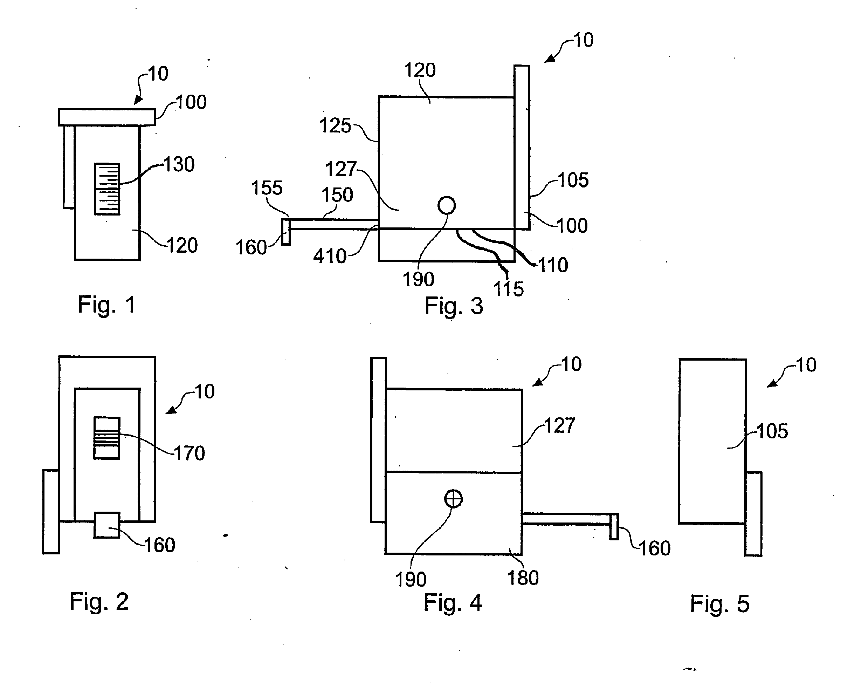

FIGURE 1 is a top view of a preferred embodiment of the saw guide;
FIGURE 2 is a front elevation of a preferred embodiment of the saw guide;
FIGURE 3 is a left side elevation of a preferred embodiment of the saw guide;
FIGURE 4 is a right side elevation of a preferred embodiment of the saw guide;
FIGURE 5 is a rear elevation of a preferred embodiment of the saw guide;
FIGURE 6 is a perspective view of a preferred embodiment of the saw guide in use;
FIGURE 7 is a perspective view of an embodiment of the saw guide not comprised in the invention; and
FIGURE 8 is a second perspective view of the embodiment of the saw guide of figure 7.

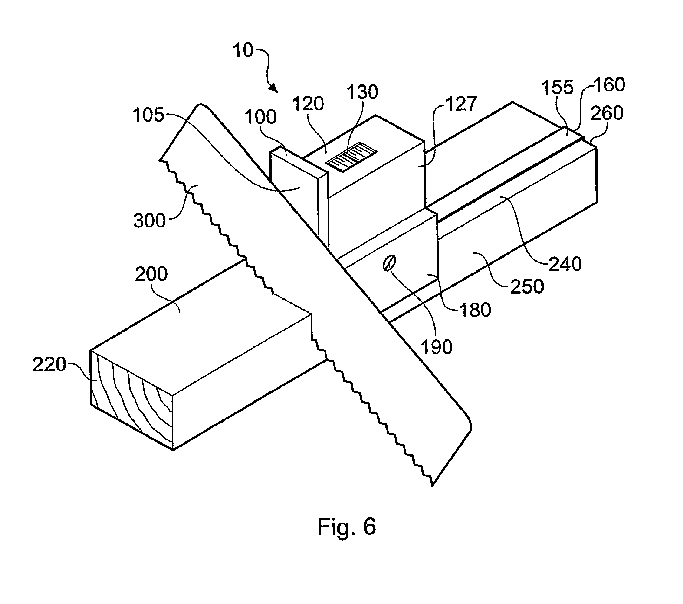

According to a preferred embodiment of the invention, the saw guide 10 comprises a guide plate 100 having a guide surface 105 and a base 110 having a basal surface 115 mounted to a body portion 120. The guide surface 105 and basal surface 115 are mutually orthogonal and face away from the body portion 120. With the basal surface 115 engaging a surface 200 of the workpiece 220 to be cut (Figure 6), the guide surface 105 extends across the surface to be cut at a forward position of the body portion 120, such that a cutting member 300 in face to face contact with the guide surface 105 may be guided during cutting of the workpiece 220.

The body portion 120 houses a retractable tape 150 which may be withdrawn from a rear face 125 of the body portion 120 in a rearward direction away from the guide plate 100. A free end 155 of the tape 150 is provided with a lip 160 for engaging an edge 260 of a workpiece. The free end provides a datum point with respect to which the position of the guide surface 105, and hence the scribing point, may be determined.

The distance between the free end 155 of the tape 150 and the guide surface 105 of the guide plate 100 may be read from a display 130 on an upper surface of the body portion 120.

A button 170 of the body portion 120 allows the tape 150 to be locked in a position such that it can be neither withdrawn nor retracted. Release of the button 170 allows a length of tape to be withdrawn by pulling on the tape, or retracted by releasing the button 170. A spring-loading mechanism within the body portion 120 of the saw guide 10 causes the tape to automatically retract when the button 170 is released.

The guide plate 100 is magnetised so as to urge a ferromagnetic cutting member 300 into contact with the guide surface 105.

The body portion 120 of the saw guide 10 further comprises a demountable guide fence 180, which comprises a plate having a substantially uniplanar major surface that may be mounted in juxtaposition with either of a pair of parallel sides 127 of the body portion 120. The guide fence is mounted to the housing by means of a screw 190.

In the mounted condition, the guide fence 180 lies in a plane mutually orthogonal to that of the basal surface 115 and the guide surface 105, and projects from the side 127 to which the guide fence 180 is mounted, and beyond the basal surface 115 on the opposite side of the basal surface 115 to the body portion 120. The guide fence 180 may be employed for holding the saw guide 10 in position along an edge 240 of a workpiece 200. The guide fence 180 is therefore useful in enhancing the accuracy of cuts which are to be made at right angles to an edge 240 of the workpiece 200. This feature has the further advantage that it provides a substantial increase in the stability of the position of the saw guide 10 along the length of the workpiece 200, since pressure may be applied by the user to urge the guide fence 180 against a side 250 of the workpiece 200, thus increasing the frictional force holding the saw guide 10 in position.

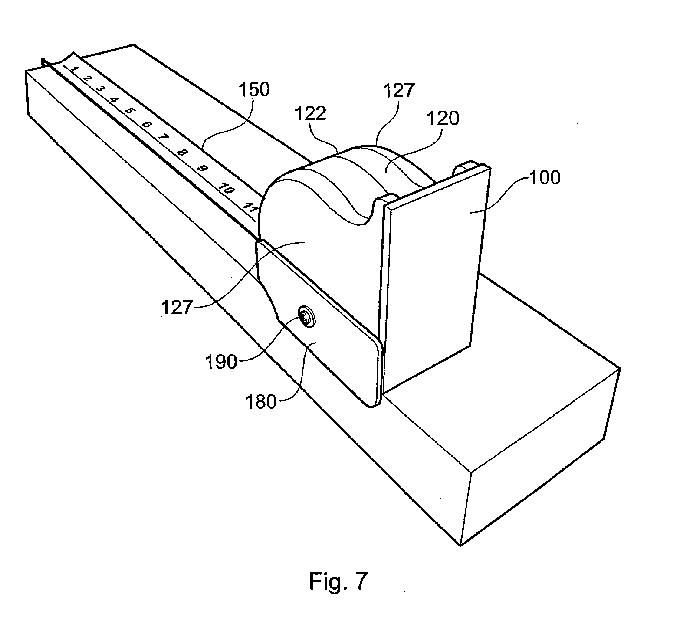

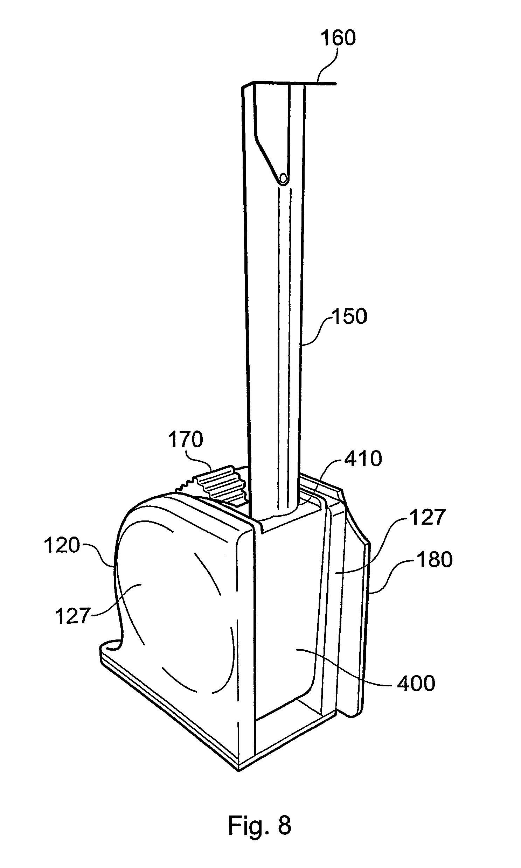

In an embodiment not comprised in the invention (Figure 7, Figure 8), the position of the guide face 105 with respect to the free end 155 of the tape may be determined by reference to graduated markings of the tape at a convenient reference location, such as an aperture 410 of the body portion through which the tape passes. Alternatively, or in addition, the graduated markings at the reference position may display the distance from the free end 150 of the tape to this reference position.

The body portion of the second embodiment comprises a moulded housing into which a tape measure 400 may be fitted. The body portion comprises two side portions 127 which connect along an edge 122. The basal surface 115 comprises an edge of each side portion 127, and the guide plate 100 comprises a plate of magnetic material fixed to the body portion. The distance from the free end 155 of the tape 150 to the guide surface 105 is determined by reference to a reading of the tape at a position of the tape at which the tape passes through an aperture 410 of the tape measure 400. Addition of a predetermined value which is the distance from the aperture 410 to the guide surface 105 along a direction normal to the guide surface allows the distance from the free end 155 of the tape 150 to the guide surface 105 to be determined.

In a third embodiment of the invention the saw guide housing comprises a laser measuring device, instead of a tape measuring device. The laser measuring device is oriented so as to project a laser beam in a direction substantially normal to the guide surface and rearwardly away from the guide surface. Thus, cutting of a workpiece can be undertaken with the laser measuring device in operation, without the cutting operation interfering with the laser beam. In a variation of this embodiment a sonic measuring device is used instead of a laser beam.

In a fourth embodiment of the invention, the guide surface 105 is pivotable about an axis normal to the basal surface 115, along an edge of the guide surface 105 and the saw guide 10 further comprises an angular reading protractor. Thus the angle of the guide surface with respect to the guide fence may be set by reference to the protractor.

In a fifth embodiment of the invention, the guide surface 105 is pivotable about an axis in the plane of the basal surface, along a lower edge of the guide surface 105. An angular reading protractor is provided to allow the angle of the guide surface 105 to be set with respect to the basal surface 115.

Throughout the description and claims of this specification, the words "comprise" and "contain" and variations of the words, for example "comprising and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A saw guide (10) for guiding the travel of a saw blade, the guide (10) being adapted to be positioned on a workpiece to be cut, such that with a basal surface (115) of the guide (10) engaging a surface of the workpiece to be cut, a guide surface (105) of the guide (10) extends across the surface to be cut so that a cutting member in face to face contact with the guide surface (105) may be guided during cutting of the workpiece without fouling the body portion (120),
**characterised in that** the guide (10) further comprises:
a body portion (120) having a forward end provided with the guide surface (105), the basal surface (115), and a rearward end provided with distance measuring means,
the measuring means being adapted to measure a distance of the guide surface (105) from an end of the workpiece located rearwardly of the body portion (120) such that the distance may be monitored by reference to said measuring means whilst the cutting member is cutting the workpiece and abutting the guide surface (105), the distance being displayed in a display window (130) provided on an upper surface of the body portion, and wherein the guide surface (105) comprises a magnetic material to urge the cutting member into contact with the saw guide (10).

2. The saw guide (10) of claim 1, wherein the measuring means is a sonic or laser beam measuring device.

3. The saw guide (10) of claim 1, wherein the measuring means is a tape (150), reversibly extendable from the rearward end of the body portion (120), in a rearward direction away from the guide surface (105).

4. The saw guide (10) of claim 3, wherein the display window (130) displays the distance from a free end of the tape (150) to the guide surface (105).

5. The saw guide (10) of any of claims 3 or 4, wherein the saw guide (10) further comprises means for securing the free end (155) of the tape (150) to the workpiece (220).

6. The saw guide (10) of any of claims 3 to 5, wherein the tape (150) comprises means for retraction when it is required to retract a length of withdrawn tape (150).

7. The saw guide (10) of claim 6, wherein the means for retraction is spring-loading of the measuring tape (150).

8. The saw guide (10) of any one of claims 3 to 7, wherein the saw guide (10) further comprises means for locking the position of the tape (150) so as to prevent further withdrawal or further retraction of tape (150).

9. The saw guide (10) of any preceding claim, wherein the saw guide (10) further comprises a guide fence (180).

10. The saw guide (10) of claim 9, wherein the guide fence (180) is releasably mountable on either of a pair of side faces of the body portion (120), said pair of side faces being mutually parallel, and orthogonal to the basal surface (115) of the body portion (120).

11. The saw guide (10) of any preceding claim, wherein the guide surface (105) is pivotable about an axis parallel to the plane of the basal surface (115).

12. The saw guide (10) of claim 11, wherein said axis is in the plane of the basal surface (115) and in the plane of the guide surface (105).

13. The saw guide (10) of claim 12, wherein the saw guide (10) further comprises means for measuring an angle of the saw guide surface (105) relative to the basal surface (115).

14. The saw guide (10) of claim 13, wherein the means for measuring an angle of the saw guide surface (105) relative to the basal surface (115) is a protractor.

15. The saw guide (10) of any one of claims 1 to 11, wherein the guide surface (105) is pivotable about an axis normal to the basal surface (115).

16. The saw guide (10) of claim 15, wherein the saw guide (10) further comprises means for measuring an angle of the saw guide surface (105) relative to a reference surface.

17. The saw guide (10) of claim 16, wherein the means for measuring said angle of the saw guide (10) is a protractor.

## Patentansprüche

1. Sägenführung (10) zum Führen der Wegstrecke eines Sägeblatts, wobei die Führung (10) dazu ausgebildet ist, auf einem zu schneidenden Werkstück angeordnet zu werden, so dass, wenn eine Grundfläche (115) der Führung (10) in Eingriff mit einer Oberfläche des zu schneidenden Werkstücks steht, eine Führungsfläche (105) der Führung (110) sich über die zu schneidende Oberfläche erstreckt, so dass ein Schneidteil in Baulängenkontakt mit der Führungsfläche (105) während des Schneidens des Werkstücks geführt werden kann, ohne den Körperabschnitt (120) zu beeinträchtigen,
**dadurch gekennzeichnet, dass** die Führung (10) weiterhin aufweist:
einen Körperabschnitt (120), der ein vorderes Ende aufweist, der mit der Führungsfläche (105) versehen ist, die Grundfläche (115), und ein hinteres Ende, das mit einer Entfernungsmessvorrichtung versehen ist,
wobei die Messvorrichtung dazu ausgebildet ist, eine Entfernung der Führungsfläche (105) von einem Ende des Werkstücks zu messen, das hinter dem Körperabschnitt (120) angeordnet ist, so dass die Entfernung durch Bezugnahme auf die Messvorrichtung überwacht werden kann, während das Schneidteil des Werkstücks schneidet, und gegen die Führungsfläche (105) anstößt, wobei die Entfernung in einem Anzeigefenster (130) angezeigt wird, das auf einer oberen Oberfläche des Körperabschnitts vorgesehen ist, und die Führungsfläche (105) ein magnetisches Material aufweist, um das Schneidteil in Kontakt mit der Sägenführung (10) zu zwingen.

2. Sägenführung (10) nach Anspruch 1, bei welcher die Messvorrichtung ein Ultraschall- oder Laserstrahlmessgerät ist.

3. Sägenführung (10) nach Anspruch 1, bei welcher die Messvorrichtung ein Band (150) ist, das umkehrbar von dem hinteren Ende des Körperabschnitts (120) ausfahrbar ist, in Rückwärtsrichtung weg von der Führungsfläche (105).

4. Sägenführung (10) nach Anspruch 1, bei welcher das Anzeigefenster (130) die Entfernung von einem freien Ende des Bands (150) zur Führungsfläche (105) anzeigt.

5. Sägenführung (10) nach Anspruch 3 oder 4, bei welcher die Sägenführung (10) weiterhin eine Vorrichtung zur Befestigung des freien Endes (155) des Bands (150) an dem Werkstück (220) aufweist.

6. Sägenführung (10) nach einem der Ansprüche 3 bis 5, bei welcher das Band (150) eine Vorrichtung zum Einziehen aufweist, wenn es erforderlich ist, eine Länge herausgezogenen Bands (150) einzuziehen.

7. Sägenführung (10) nach Anspruch 6, bei welcher die Vorrichtung zum Einziehen eine Federbelastung auf das Messband (150) ausübt.

8. Sägenführung (10) nach einem der Ansprüche 3 bis 7, bei welcher die Sägenführung (10) weiterhin eine Vorrichtung zum Festsetzen der Position des Bands (150) aufweist, um ein weiteres Abziehen oder ein weiteres Einziehen des Bandes (150) zu verhindern.

9. Sägenführung (10) nach einem der voranstehenden Ansprüche, bei welcher die Sägenführung (10) weiterhin eine Führungsschiene (180) aufweist.

10. Sägenführung (10) nach Anspruch 9, bei welcher die Führungsschiene (180) abnehmbar auf jeder von zwei Seitenoberflächen des Körperabschnitts (120) anbringbar ist, die beiden Seitenoberflächen parallel zueinander verlaufen, und orthogonal zur Grundfläche (115) des Körperabschnitts (120).

11. Sägenführung (10) nach einem der voranstehenden Ansprüche, bei welcher die Führungsfläche (105) um eine Achse parallel zur Ebene der Grundfläche (115) verschwenkbar ist.

12. Sägenführung (10) nach Anspruch 11, bei welcher die Achse in der Ebene der Grundfläche (115) und in der Ebene der Führungsfläche (105) liegt.

13. Sägenführung (10) nach Anspruch 12, bei welcher die Sägenführung (10) weiterhin eine Vorrichtung zur Messung eines Winkels der Sägenführungsfläche (105) relativ zur Grundfläche (115) aufweist.

14. Sägenführung (10) nach Anspruch 13, bei welcher die Vorrichtung zur Messung eines Winkels der Sägenführungsfläche (105) relativ zur Grundfläche (115) ein Winkelmesser ist.

15. Sägenführung (10) nach einem der Ansprüche 1 bis 11, bei welcher die Führungsfläche (105) um eine Achse normal zur Grundfläche (115) verschwenkbar ist.

16. Sägenführung (10) nach Anspruch 15, bei welcher die Sägenführung (10) weiterhin eine Vorrichtung zur Messung eines Winkels der Sägenführungsfläche (105) relativ zu einer Bezugsfläche aufweist.

17. Sägenführung (10) nach Anspruch 16, bei welcher die Vorrichtung zur Messung des Winkels der Sägenführung (10) ein Winkelmesser ist.

## Revendications

1. Un guide de scie (10) pour guider le déplacement d'une lame de scie, le guide (10) étant adapté pour être positionné sur une pièce devant être coupée, de façon qu'avec une surface de base (115) du guide (10) coopérant avec une surface de la pièce devant être coupée, une surface de guidage (105) du guide (10) s'étende en travers de la surface devant être coupée de telle sorte qu'un élément de coupe en contact face à face avec la surface de guidage (105) puisse être guidé pendant la coupe de la pièce sans encrasser la partie de corps (120),
**caractérisé en ce que** le guide (10) comporte en outre :
une partie de corps (120) ayant une extrémité avant munie de la surface de guidage (105), la surface de base (115), et une extrémité arrière munie de moyens de mesure de distance,
les moyens de mesure étant adaptés pour mesurer une distance entre la surface de guidage (105) et une extrémité de la pièce située vers l'arrière de la partie de corps (120) de façon que la distance puisse être surveillée par référence aux dits moyens de mesure pendant que l'élément de coupe coupe la pièce et bute contre la surface de guidage (105), la distance étant affichée dans une fenêtre d'affichage (130) aménagée sur une surface supérieure de la partie de corps, et où la surface de guidage (105) comprend un matériau magnétique pour plaquer l'élément de coupe au contact du guide de scie (10).

2. Le guide de scie (10) selon la revendication 1, où les moyens de mesure sont constitués d'un dispositif de mesure à faisceau acoustique ou laser.

3. Le guide de scie (10) selon la revendication 1, où les moyens de mesure sont constitués d'une bande (150), extensible de façon réversible à partir de l'extrémité arrière de la partie de corps (120), dans une direction arrière à partir de la surface de guidage (105).

4. Le guide de scie (10) selon la revendication 3, où la fenêtre d'affichage (130) affiche la distance entre une extrémité libre de la bande (150) et la surface de guidage (105).

5. Le guide de scie (10), selon l'une des revendications 3 et 4, où le guide de scie (10) comporte en outre des moyens pour fixer l'extrémité libre (155) de la bande (150) sur la pièce (220).

6. Le guide de scie (10) selon l'une quelconque des revendications 3 à 5, où la bande (150) comporte des moyens de rétraction quand il est nécessaire de rétracter une longueur de bande étirée (150).

7. Le guide de scie (10) selon la revendication 6, où les moyens de rétraction sont un chargement à ressort de la bande de mesure (150).

8. Le guide de scie (10) selon l'une quelconque des revendications 3 à 7, où le guide de scie (10) comporte en outre des moyens pour bloquer la bande (150) en position afin d'empêcher un retrait supplémentaire ou une rétraction supplémentaire de la bande (150).

9. Le guide de scie (10) selon l'une quelconque des revendications précédentes, où le guide de scie (10) comporte en outre une joue de guidage (180).

10. Le guide de scie (10) selon la revendication 9, où la joue de guidage (180) est montée de façon amovible sur l'une ou l'autre des faces latérales de la partie de corps (120), les deux faces latérales étant parallèles entre elles, et orthogonales à la surface de base (115) de la partie de corps (120).

11. Le guide de scie (10) selon l'une quelconque des revendications précédentes, où la surface de guidage (105) est montée pivotante autour d'un axe parallèle au plan de la surface de base (115).

12. Le guide de scie (10) selon la revendication 11, où ledit axe est dans le plan de la surface de base (115) et dans le plan de la surface de guidage (105).

13. Le guide de scie (10) selon la revendication 12, où le guide de scie (10) comporte en outre des moyens pour mesurer un angle entre la surface de guidage de scie (105) et la surface de base (115).

14. Le guide de scie (10) selon la revendication 13, où les moyens pour mesurer un angle entre la surface de guidage de scie (105) et la surface de base (115) sont constitués par un rapporteur.

15. Le guide de scie (10) selon l'une quelconque des revendications 1 à 11, où la surface de guidage (105) est montée pivotante autour d'un axe orthogonal à la surface de base (115).

16. Le guide de scie (10) selon la revendication 15, où le guide de scie (10) comporte en outre des moyens pour mesurer un angle de la surface de guidage de scie (105) par rapport à une surface de référence.

17. Le guide de scie (10) selon la revendication 16, où les moyens pour mesurer ledit angle du guide de scie (10) sont constitués par un rapporteur.
